Europäisches Patentamt

European Patent Office

Office européen des brevets

(19)

(11) Veröffentlichungsnummer: **0 073 494**
B1

# EUROPÄISCHE PATENTSCHRIFT

(12)

(45) Veröffentlichungstag der Patentschrift:
09.04.86

(21) Anmeldenummer: 82107879.7

(22) Anmeldetag: 27.08.82

(51) Int. Cl.⁴: **C 23 G 1/00, H 02 K 9/00**

(54) Verfahren zur Reinigung von Hohlleitern gekühlter elektrischer Maschinen und Apparate.

(30) Priorität: 02.09.81 DE 3134803

(43) Veröffentlichungstag der Anmeldung:
09.03.83 Patentblatt 83/10

(45) Bekanntmachung des Hinweises auf die Patenterteilung:
09.04.86 Patentblatt 86/15

(84) Benannte Vertragsstaaten:
CH FR GB LI NL SE

(56) Entgegenhaltungen:
DE - A - 2 037 794
DE - A - 2 900 757
DE - A - 3 027 322
GB - A - 1 293 440

(73) Patentinhaber: BROWN, BOVERI & CIE
Aktiengesellschaft, Kallstadter Strasse 1,
D-6800 Mannheim 31 (DE)

(72) Erfinder: Gamer, Gerold, Dr. Dipl.-Chem., Am
Waldrand 29, D-6800 Mannheim 81 (DE)

(74) Vertreter: Kempe, Wolfgang, Dr. et al, c/o Brown, Boveri
& Cie AG Postfach 351, D-6800 Mannheim 1 (DE)

## Beschreibung

Die Erfindung betrifft ein Verfahren zur chemischen Reinigung wassergekühlter Hohlleiter von elektrischen Maschinen und Apparaten, deren Kühlkreislauf durch eine Speisepumpe aufrechterhalten wird und in einem Bypass einen Ionentauscher aufweist. Wenn das Verfahren zur Reinigung andersartig gekühlter Hohlleiter eingesetzt werden soll, müssen diese Einrichtungen in der Regel erst geschaffen werden.

Für die Reinigung wassergekühlter Hohlleiter sind Verfahren bekannt, bei denen der geschlossene Kühlkreislauf aufgetrennt und an eine Reinigungseinrichtung angeschlossen wird. Dieser Eingriff in die Anlage ist arbeits- und zeitaufwendig und erfordert eine relativ lange Stillstandzeit mit ebenfalls langer Zugriffszeit der Anlage.

Nach Anschluß der Reinigungseinrichtung, die im wesentlichen einen Reinigungsbehälter und eine Reinigungsmittelpumpe sowie eine Nachfülleinrichtung für das Kondensat aufweist, wird das Kühlwasser aus dem Kühlkreislauf der Hohlleiter abgelassen und Reinigungsmittel eingefüllt und umgewälzt. Als Reinigungsmittel dienen Beizlösungen, die z.B. Mineralsäure, (Schwefelsäure, Salzsäure etc.) und gelegentlich zusätzlich Oxidationsmittel (Kaliumbichromat, Ammoniumperoxidisulfat etc) enthalten.

Nachdem die Beizlösung inaktiv geworden ist, wird sie abgelassen. Gegebenenfalls schließen sich weitere Beizzyklen an. Um die Oberfläche der Hohlleiter zu schonen (Aufrauhung) und um die Wandstärke der Hohlleiter nicht zu stark zu mindern, muß die Beizzeit so kurz wie möglich gehalten werden, so daß häufig ein Kompromiß zwischen Reinigungsergebnis und Angriff der Hohlleiteroberfläche gefunden werden muß.

Ein weiteres Problem stellt die Entsorgung der verbrauchten Beizlösung dar.

Durch die DE-A- 20 37 794 ist ein Kühlflüssigkeitskreislauf für Turbogeneratoren bekanntgeworden, bei dem eine Pumpe, ein Kühler und ein Feinstfilter in Reihe mit dem Kühlkreislauf der elektrischen Maschine geschaltet sind. Parallel zu der Pumpe, dem Kühler und dem Feinstfilter liegt in einem Bypass ein Mischbettfilter, welches einen Anionen- und Kationentauscher zur Beseitigung von Kupfer, und anderen unerwünschten Ionen aus dem Kühlwasser enthält. Auch das der vorliegenden Erfindung zugrundeliegende Problem, der Reinigung von Hohlleitern, insbesondere der Beseitigung von Ablagerungen in Kühlsystemen elektrischer Maschinen, wird in der DE-A-20 37 794 nicht näher eingegangen. Es fehlt auch jede Angabe zu dem Problem der Zugabe eines Reinigungsmittels in das Kühlsystem.

Aufgabe der Erfindung ist es, ein Verfahren zur Hohlleiterreinigung nach dem Oberbegriff des Patentanspruches 1 anzugeben, das ohne Änderungen am Kühlkreislauf durchführbar ist und das jederzeit innerhalb relativ kurzer Zeit abgebrochen werden kann und eine Reinigung des Kreislaufwassers über den Ionentauscher erlaubt, so daß nach relativ kurzer Zugriffszeit die den Hohlleiter enthaltende Anlage wieder in Betrieb genommen werden kann. Die eingangs aufgezeigten Probleme und Nachteile bekannter Verfahren sollen dabei vermieden werden.

Diese Aufgabe wird erfindungsgemäß durch den kennzeichnenden Teil des Patentanspruchs 1 gelöst.

Für die Zugabe des Komplexierungsmittels, das der Lösung von im Kreislauf enthaltenen Kupferkorrosionsprodukten dient, kann der drucklose Kühlkreislauf an geeigneter Stelle geöffnet werden, bzw. eine Druckpumpe (Dosierpumpe) angeschlossen werden. Die Menge der Zugabe und damit die Konzentration der Lösung hängt vorzugsweise von der Menge der aufzulösenden Korrosionsprodukte, dem Kreislaufvolumen und der Oberfläche des Hohlleitersystems und des Kühlkreislaufes ab.

Wie bereits bekannt ist (DE-A-29 00 757) reagieren Kupferkorrosionsprodukte bei Anwendung von Komplexierungsmitteln zu Kupferkomplexen. Diese bleiben in der Reinigungsphase des Verfahrens bei geöffnetem Bypass im Ionentauscher zurück. Das Verfahren kann mit vergleichsweise (siehe Beizlösungen) niedrigen Chemikalien-Konzentrationen durchgeführt werden.

Als Komplexbildner sind erfindungsgemäß Chelatbildner geeignet. Diese organischen Komplexbildner sind Derivate der Essigsäure und bilden sehr stabile Metallkomplexe.

Wenn man sie als freie Säure einsetzt, kann man die Reaktion mit Kupferionen unmittelbar an der Abnahme der Leitfähigkeit beobachten. Als freie Säure sind sie jedoch in neutralem Wasser kaum löslich, sodaß ihre Zugabein den Kreislauf problematisch ist. Darum wird vorzugsweise ein leicht lösliches Salz der Chelate verwendet, von denen aus Kostengründen das Natriumsalz bevorzugt werden kann.

Besonders geeignete ghelatbildner sind Ethylendiamintetraessigsäure (EDTA im internationalen Sprachgebrauch), Nitrilotriessigsäure (NTA im internationalen Sprachgebrauch) Diethylentriaminpentaessigsäure (DTFA im internationalen Sprachgebrauch) Cyclohexandiamintetraessigsäure (CDTA im internationalen Sprachgebrauch) und die Hydroxyethylendiaminotriessigsäure (HEDTA im internationalen Sprachgebrauch) und deren Salze, z.B. das Dinatriumsalz der EDTA oder der CDTA das Pentanatriumsalz der DTPA oder das Trinatriumsalz der HEDTA.

Aus Kostengründen kann im allgemeinen dem EDTA der Vorzug gegeben werden, auch wenn die Komplexbildungskonstante für Kupferkomplexe bei CDTA und DTPA höher ist.

EDTA bildet nur mit zweiwertigen Kupfer Cu (II) einen Komplex. Allerdings reagiert es auch mit Cu (I) unter Disproportionierung, wobei metallisches Kupfer entsteht:

$$2\,Cu\,(I) + EDTA \rightleftharpoons Cu\,(II)(EDTA) + Cu$$

In vorteilhafter Weise wird dieses metallische Kupfer durch Zugabe eines Oxidationsmittels in den Kühlkreislauf in Lösung gebracht. Das Oxidationsmittel kann bevorzugt aus Wasserstoffperoxid $H_2O_2$ bestehen, da dieses bei der Reaktion in wässriger Lösung keine Rückstände bildet.

Aus dem gleichen Grund ist auch Sauerstoffgas als Oxidationsmittel geeignet. Es kann der Lösung durch Belüften zugeführt werden.

An Hand der schematischen Darstellung wird ein Verfahren zur chemischen Reinigung eines ein Hohlleitersystem enthaltenden Kühlkreislaufes als Beispiel erläutert.

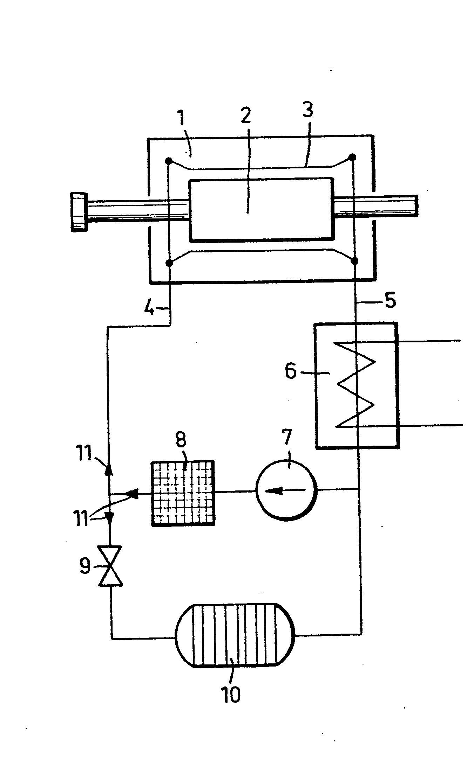

Die Figur zeigt in stark vereinfachter Darstellung den Kühlkreislauf für die Wicklung einer wassergekühlten elektrischen Maschine. Die skizzierte Maschine 1 besteht im wesentlichen aus Rotor 2 und Stator, dessen Wicklungen 3 aus Kupferhohlleitern bestehen und über Rohrleitungen 4,5 mit einem Wärmetauscher 6, einer Kühlmittelpumpe 7 und einem Filter 8 zu einem Kühlkreislauf verbunden sind. Parallel zu der Kühlmittelpumpe 7 und dem Filter 8 ist als Bypass ein Reinigungskreis, bestehend aus Absperrventil 9 und Ionentauscher 10 angeschlossen. Der Kühlkreislauf ist geschlossen.

Die Durchströmrichtung des Kühlmediums Wasser, ist durch Pfeile 11 angegeben. Das Wasser ist ein reines Deionat mit geringer Leitfähigkeit, das während des Betriebs ständig im Ionentauscher 10 (Mischbett mit Anionen- und Kationentauscher) aufbereitet wird.

Während langer Betriebszeiten der Maschine können sich in dem Kühlkreis Kupferkorrosionsprodukte bilden, insbesondere Cuprit $Cu_2O$ und Tenorit $CuO$. Die Kupferkorrosionsprodukte lagern sich an den Wandungen des Kühlsystems, insbesondere im Bereich der Statorwicklungen 3, an und führen zu einem allmählichen Zuwachsen der Querschnitte, sodaß bei gleicher Kühlmitteldurchflußmenge der Druckabfall über der Statorwicklung zunimmt. Die Kühlleistung nimmt infolge schlechter Wärmeübergangswerte ab. Es ist auch möglich, daß durch die Korrosionsprodukte einzelne Stäbe der Statorwicklungen 3 völlig verstopfen. Es ist daher notwendig, den Kühlkreislauf chemisch zu reinigen, wenn dies durch eine entsprechende Druckzunahme über der Statorwicklung angezeigt ist.

Die Reinigung erfolgt, nachdem die Maschine außer Betrieb gesetzt wurde. Dazu wird das Ventil 9 geschlossen, und die Reinigungslösung im Hauptkreis zugegeben und umgewälzt. Das Dinatriumsalz der EDTA bildet mit zweiwertigem Kupfer Cu (II) einen Komplex. Es reagiert auch mit einwertigem Kupfer Cu (I) unter Disproportionierung. Infolge der Bildung sehr stabiler Komplexe (Komplexbildungskonstante $10^{18,8}$ nach Schwarzenbach Flaschka "Die komplexometrische Titration" 1965) erfolgt eine nahezu vollständige Reaktion mit den Kupferionen.

Das bei der Disproportionierung entstehende metallische Kupfer wird durch das zugegebene $H_2O_2$ oxidiert. Dabei reagiert das durch Disproportionierung entstehende Kupfer infolge seiner größeren spezifischen Oberfläche rascher mit $H_2O_2$ als das Kupfer der Hohlleiterwandungen. Durch Zugabe von $H_2O_2$ wird vermieden, daß die Leitungen des Kühlsystems verkupfern und so Isolierstrecken überbrückt werden.

Im Gegensatz zum Einsatz von EDTA als freie Säure nimmt bei einer Spülung mit dem Dinatriumsalz der EDTA die Leitfähigkeit bei der Reaktion des Komplexbildners mit Kupferionen nur wenig ab. Daher kann die Umsetzung nur an der Farbzunahme oder analytisch z.B. mittels der Atom-Absorption-Spektroskopie verfolgt werden.

Nach erfolgter Reaktion (1 bis 2 Stunden) wird das Ventil 9 geöffnet, sodaß die Reinigung des Kühlwassers über den Ionentauscher 10 erfolgt. Ein Auswechseln des Kühlwassers ist nicht notwendig.

Im Anschluß an die Wasserreinigung schließen sich weitere Reinigungszyklen an.

Die Reinigung kann jederzeit unterbrochen werden, so daß nach Reinigung des Kühlwassers über den Ionentauscher 10 die Maschine 1 kurzfristig in Betrieb genommen werden kann.

Da die Chemikalienkonzentration niedrig gewählt werden kann, werden die im Kühlkreislauf liegenden Materialien im Gegensatz zu der Beizmethode nach dem Stand der Technik nur in sehr geringem Ausmaß angegriffen. Insbesondere ist der Angriff der Hohlleiterwandungen sehr gering.

## Patentansprüche

1. Verfahren zur chemischen Reinigung von wassergekühlten Hohlleiter elektrischer Maschinen und Apparate, deren Kühlkreislauf durch eine Speisepumpe aufrechterhalten wird und in einem Bypass einen Ionentauscher aufweist, dadurch gekennzeichnet, daß der Bypass absperrbar ist und daß alternierend bei geschlossenem Bypass ein Komplexierungsmittel zur Lösung von in den Hohlbeitern abgelagerten Kupferkorrosionsprodukten in den Külkreislauf zugegeben wird und anschließend bei geöffnetem Bypass eine Reinigung des Kühlwassers über den Ionentauscher erfolgt.

2. Verfahren nach Anspruch 1, dadurch gekennzeichnet, daß das Komplexierungsmittel ein Chelatbildner ist.

3. Verfahren nach Anspruch 1, dadurch gekennzeichnet, daß das Komplexierungsmittel ein Salz, vorzugsweise ein Natriumsalz, eines Chelatbildners ist.

4. Verfahren nach einem der Ansprüche 1 bis 3, dadurch gekennzeichnet, daß das Komplexierungsmittel die Ethylendiamintetraessigsäure oder eines ihrer Salze, vorzugsweise das Dinatriumsalz, enthält.

5. Verfahren nach einem der Ansprüche 1 bis 3, dadurch gekennzeichnet, daß das Komplexierungsmittel die Nitrilotriessigsäure oder eines ihrer Salze, vorzugsweise das Dinatriumsalz, enthält.

6. Verfahren nach einem der Ansprüche 1 bis 3, dadurch gekennzeichnet, daß das Komplexierungsmittel die Diethylentriaminpentaessigsäure oder eines ihrer Salze, vorzugsweise das Pentanatriumsalz enthält.

7. Verfahren nach einem der Ansprüche 1 bis 3, dadurch gekennzeichnet, daß das Komplexierungsmittel die Cyclohexandiamintetraessigsäure oder eines ihrer Salze, vorzugsweise das Dinatriumsalz enthält.

8. Verfahren nach einem der Ansprüche 1 bis 3, dadurch gekennzeichnet, daß das Komplexierungsmittel die Hydroxyethylendiaminotriessigsäure oder eines ihrer Salze, vorzugsweise das Trinatriumsalz, enthält.

9. Verfahren nach einem der Ansprüche 1 bis 8, dadurch gekennzeichnet, daß zusätzlich zum Komplexierungsmittel wenigstens in einem Durchlaufzyklus ein Oxidationsmittel in den Kühlkreis zugegeben wird.

10. Verfahren nach Anspruch 9, dadurch gekennzeichnet, daß das Oxidationsmittel Wasserstoffperoxid enthält.

11. Verfahren nach Anspruch 9, dadurch gekennzeichnet, daß das Oxidationsmittel Sauerstoffgas enthält.

**Revendications**

1. Procédé pour le nettoyage chimique de conducteurs creux, refroidis à l'eau, des machines et appareils électriques, dont le circuit de refroidissement est maintenu par une pompe d'alimentation et présente dans une dérivation un échangeur d'ions, caractérisé par le fait que la dérivation peut être isolée et que, en alternance, la dérivation étant fermée, on ajoute un agent complexant dans le circuit de refroidissement pour dissoudre les produits de corrosion du cuivre qui se sont déposés dans les conducteurs creux, et, ensuite, la dérivation étant ouverte, il se produit une purification de l'eau de refroidissement par l'échangeur d'ions.

2. Procédé selon la revendication 1, caractérisé par le fait que l'agent complexant est un agent chélatant.

3. Procédé selon la revendication 1, caractérisé par le fait que l'agent complexant est un sel, de préférence un sel de sodium, d'un agent chélatant.

4. Procédé selon une des revendications 1 à 3, caractérisé par le fait que l'agent complexant contient l'acide éthylénediaminetétracétique ou un de ses sels, de préférence le sel disodique.

5. Procédé selon une des revendications 1 à 3,
caractérisé par le fait que l'agent complexant contient l'acide nitrilotriacétique ou un de ses sels, de préférence le sel disodique.

6. Procédé selon une des revendications 1 à 3, caractérisé par le fait que l'agent complexant contient l'acide diéthylènetriaminepentacétique ou un de ses sels, de préférence le sel pentasodique.

7. Procédé selon une des revendications 1 à 3, caractérisé par le fait que l'agent complexant contient l'acide cyclohexanediaminetétracétique ou un de ses sels, de préférence le sel disodique.

8. Procédé selon une des revendications 1 à 3, caractérisé par le fait que l'agent complexant contient l'acide hydroxyéthylénediaminetriacétique ou un de ses sels, de préférence le sel trisodique.

9. Procédé selon une des revendications 1 à 8, caractérisé par le fait que, en plus de l'agent complexant, on ajoute au moins dans un cycle de passage un oxydant dans le circuit de refroidissement.

10. Procédé selon la revendication 9, caractérisé par le fait que l'oxydant contient de l'eau oxygénée.

11. Procédé selon la revendication 9, caractérisé par le fait que l'oxydant contient de l'oxygène gazeux.

**Claims**

1. Process for the chemical cleaning of water-cooled hollow conductors of electrical machines and apparatus, the cooling circulation of which is maintained by means of a feed pump and contains an ion exchanger in a bypass, characterized in that the by-pass can be isolated and that alternatively, with the by-pass closed, a complexing agent for dissolving copper corrosion products deposited in the hollow conductors is added to the cooling circulation and then, with the by-pass open, cleaning of the cooling water via the ion exchanger takes place.

2. Process according to claim 1, characterized in that the complexing agent is a chelate former.

3. Process according to claim 1, characterized in that the complexing agent is a salt, preferably a sodium salt, of a chelate former.

4. Process according to one of claims 1 to 3, characterized in that the complexing agent contains ethylenediaminetetraacetic acid or one of its salts, preferably the disodium salt.

5. Process according to one of claims 1 to 3, characterized in that the complexing agent contains nitrilotriacetic acid or one of its salts, preferably the disodium salt.

6. Process according to one of claims 1 to 3, characterized in that the complexing agent contains diethylenetriaminepentaacetic acid or one of its salts, preferably the pentasodium salt.

7. Process according to one of claims 1 to 3, characterized in that the complexing agent contains cyclohexanediaminetetraacetic acid or one of its salts, preferably the disodium salt.

8. Process according to one of claims 1 to 3, characterized in that the complexing agent contains hydroxyethylenediaminetriacetic acid or one of its salts, preferably the trisodium salt.

9. Process according to one of claims 1 to 8, characterized in that, additionally to the complexing agent, an oxidizing agent is added to the cooling circulation in at least one flow cycle.

10. Process according to claim 9, characterized in that the oxidizing agent contains hydrogen peroxide.

11. Process according to claim 9, characterized in that the oxidizing agent contains oxygen gas.